# EUROPÄISCHE PATENTSCHRIFT

(11) **EP 1 758 668 B1**
(45) Veröffentlichungstag und Bekanntmachung des Hinweises auf die Patenterteilung: **15.04.2009**
(21) Anmeldenummer: 04738788.1
(22) Anmeldetag: 22.06.2004
(51) Int. Cl.: B01D 35/027, B01D 35/30, C02F 1/32, C02F 9/00

(54) **DURCHLAUFFILTER MIT SCHMUTZKONTROLLE**
THROUGH FILTER WITH CONTAMINATION INDICATOR
FILTRE DE PASSAGE AVEC CONTROLE D'ENCRASSEMENT

(43) Veröffentlichungstag der Anmeldung: 07.03.2007
(73) Patentinhaber: Oase GmbH, 48477 Hörstel (DE)
(72) Erfinder: HOFFMEIER, Dieter, 49479 Ibbenbüren (DE)
(74) Vertreter: Kayser, Christoph
(86) Internationale Anmeldenummer: PCT/DE2004/001339
(87) Internationale Veröffentlichungsnummer: WO 2005/123215

(56) Entgegenhaltungen:
- DE-A- 10 240 454
- US-A- 4 246 114
- US-A1- 2004 060 854
- US-B1- 6 461 501

## Beschreibung

Die vorliegende Erfindung betrifft einen Durchlauffilter mit einem Gehäuse, das einen Gehäuseboden und einen Gehäusedeckel aufweist und mit dem Gehäuseboden in der Nähe eines Untergrunds aufstellbar ist, mit einer Filtereinrichtung aus einem Filtermedium im Strömungsweg eines zu reinigenden Fluids, wobei das Fluid über eine Einlauföffnung in die Filtereinrichtung eintritt und über eine Auslauföffnung aus der Filtereinrichtung austritt, wobei ein Zwischendeckel mit einer in Bezug zu dem Gehäuseboden bodennahen Seite und bodenfernen Seite im Inneren des Gehäuses ausgebildet ist und die Filtereinrichtung zwischen dem Zwischendeckel und dem Gehäuseboden angeordnet ist und die Auslauföffnung in dem Zwischendeckel ausgebildet ist und mit einem Gehäuseaustritt-Anschluss in Fluidverbindung steht, wobei die Einlauföffnung auf der Oberseite eines Ansatzstückes angeordnet ist und auf einem höheren Niveau liegt als die Auslauföffnung.

Ein solcher Durchlauffilter ist aus US-A-4,246,114 bekannt. Mit einem solchen Durchlauffilter sind zahlreiche Nachteile verbunden. Der wichtigste Nachteil ist der, dass die Verschmutzung des Filtermediums äußerlich nicht wahrnehmbar ist. Es ist daher bisher erforderlich, die Filtereinrichtung auszubauen, um den Verschmutzungsgrad zu prüfen. Dies ist zeitaufwendig und bringt aufgrund des zufälligen Charakters der Prüfintervalle keine Gewähr für eine stets optimale Filterung, z.B. von Teichwasser.

Die Aufgabe der vorliegenden Erfindung ist daher, einen Durchlauffilter der eingangs beschriebenen Gattung zu schaffen, bei dem eine übermäßige Verschmutzung der Filtereinrichtung ohne Ausbau derselben wahrnehmbar ist und dessen Filtermedium leicht gereinigt werden kann.

Die Aufgabe wird erfindungsgemäß dadurch gelöst, dass die Einlauföffnung bei verunreinigter Filtereinrichtung eine Überlauffunktion für das Fluid übernimmt, wobei die Einlauföffnung in ihrer Überlauffunktion mit dem Gehäuseaustritts-Anschluss in Fluidverbindung steht.

Mit dem erfindungsgemäßen Durchlauffilter ist es möglich, die Verschmutzung des Filtermediums am Füllstand des Fluids in dem Gehäuse über dem Zwischendeckel zu festzustellen. Wenn das Filtermedium "dicht" ist, wird das ganze Fluid im wesentlichen direkt, ohne den Umweg durch die Filtereinrichtung zu dem Gehäuseaustritt-Anschluss gelenkt, so dass das Fluidvolumen über dem Zwischendeckel stark zunimmt.

Weitere Vorteile ergeben sich aus den Merkmalen der Ansprüche 2 bis 14.

Ausführungsformen der vorliegenden Erfindung werden im Folgenden anhand der Zeichnungen näher beschrieben. Es zeigen:
- Fig. 1: eine schematische, perspektivische Ansicht eines aufgeschnittenen Durchlauffilters ohne Deckel und mit sichtbarem UVC-Gerät, gemäß einer ersten Ausführungsform der vorliegenden Erfindung;
- Fig. 2: eine schematische, perspektivische Ansicht des aufgeschnittenen Durchlauffilters aus Fig. 1, mit Deckel und nicht sichtbarem UVC-Gerät und mit einem beispielhaft eingesetzten Filtermedium;
- Fig. 3: eine schematische Ansicht eines Halters für das Filtermedium gemäß der ersten Ausführungsform der vorliegenden Erfindung ohne Reinigungseinrichtung;
- Fig. 4: eine schematische, perspektivische Ansicht eines Halters für das Filtermedium gemäß einer zweiten Ausführungsform der vorliegenden Erfindung mit Reinigungseinrichtung;

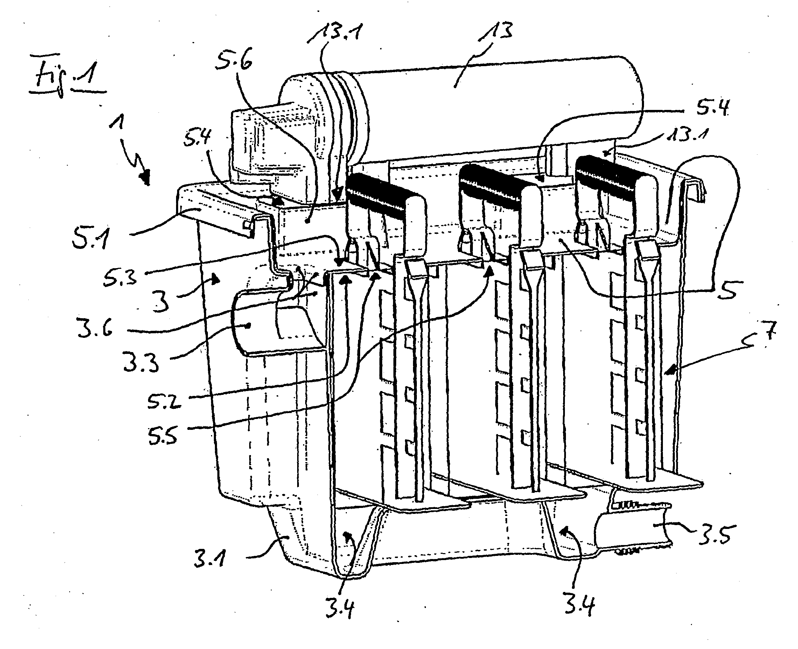

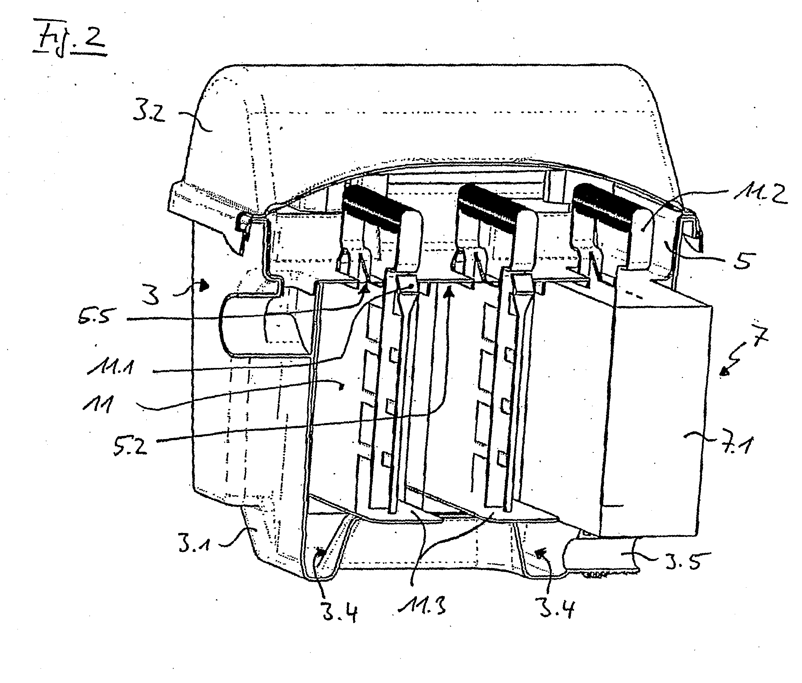

In Fig. 1 ist schematisch ein Durchlauffilter 1 gemäß vorliegender Erfindung dargestellt. Der Durchlauffilter 1 weist ein Gehäuse 3 mit einem Gehäuseboden 3.1 und einem Gehäusedeckel 3.2 (Fig. 2). Der Gehäusedeckel 3.2 in an sich bekannter Art und Weise an dem Gehäuse 3 lösbar befestigt. Es ist auch denkbar, dass der Gehäusedeckel 3.2 an dem Gehäuse 3 an einer Seite, einer Längsseite oder einer Querseite, angelenkt ist. Solche lösbaren Verbindungen zur wahlfreien Öffnung und Schließung eines Gehäuses sind allgemein bekannt und werden hier nicht weiter beschrieben.

An dem Gehäuse 3 ist ein Gehäuseaustritt-Anschluss 3.3 für ein aus dem Durchtauffilter 1 ausfließendes Fluid ausgebildet. In der vorliegenden Ausführungsform ist der Gehäuseaustritt-Anschluss 3.3 an das Gehäuse 3 angeformt. Der Gehäuseboden 3.1 ist im Gehäuseinneren als umlaufende Schmutzauffangwanne 3.4 ausgebildet. An einer Stelle weist die Schmutzauffangwanne 3.4 einen Schmutzablauf 3.5 auf. Der Schmutzablauf 3.5 ist in der vorliegenden Ausführungsform als Anschlussstück für einen Schlauch o. dgl. ausgebildet. In anderen Ausführungsformen könnten der Schmutzablauf 3.5 und die Schmutzauffangwanne 3.4 auch in ganz anderer Form ausgebildet sein, sofern noch Schmutz aufgefangen und äbgeführt werden kann.

In dem Gehäuse 3 ist ein Zwischendeckel 5 angeordnet. Der Zwischendeckel 5 begrenzt in dem Gehäuse 3 einen Raum nach oben (deckelseitig). In der vorliegenden Ausführungsform ist der Zwischendeckel 5 wannenförmig ausgebildet und weist einen nach außen gebogenen Umfangsrand 5.1 auf. Mit dem Umfangsrand 5.1 ist der Zwischendeckel 5 auf einen ebenfalls nach außen gebogenen Gehäuserand aufgesteckt und kann dort durch Rasten lösbar festgeklemmt sein. Die Befestigung des Zwischendeckels 5 an dem Gehäuse 3 kann auch in einer anderen an sich bekannten Art und Weise erfolgten.

Der Zwischendeckel 5 weist eine in Bezug zum Gehäuseboden 3.1 bodennahe Seite 5.2 und bodenferne Seite 5.3 auf. Die bodennahe Seite 5.2 ist aufgrund der perspektivischen Darstellung nicht zu sehen. Auf der bodenfernen Seite 5.3 ist wenigstens eine Einlauföffnung 5.4 für ein zu reinigendes Fluid in eine Filtereinrichtung 7 ausgebildet bzw. angeformt. In der durch die bodennahe Seite 5.2 und bodenferne Seite 5.3 aufgespannten Fläche ist wenigstens eine Auslauföffnung 5.5 aus der Filtereinrichtung 7 für ein gereinigtes Fluid ausgebildet. In der vorliegenden Ausführungsform sind drei Auslauföffnungen 5.5 und zwei Einlauföffnungen 5.4 vorgesehen. Die Zahl der Einlauföffnungen 5.4 Auslauföffnungen 5.5 kann wahlfrei bestimmt werden. Das Niveau der Auslauföffnungen 5.5 auf der bodenfernen Seite 5.3 liegt niedriger als das Niveau der Einlauföffnung 5.4. Die Einlauföffnung 5.4 ist auf der Oberseite eines Ansatzstückes 5.6 ausgebildet. Die Höhe des Ansatzstückes 5.6 über der bodenfernen Seite 5.3 bestimmt den durch Ablauf aus, dem Gehäuseaustritt-Anschluss 3.3 entstehenden Unterdruck.

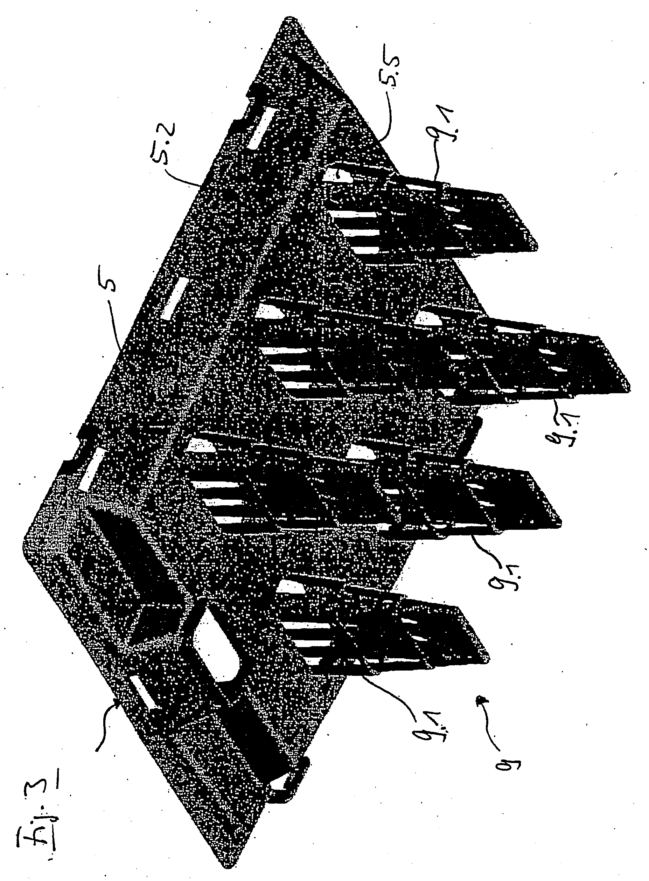

Zwischen dem Zwischendeckel 5 und dem Gehäuseboden 3.1 ist die Filtereinrichtung 7 angeordnet. Die Filtereinrichtung 7 weist ein Filtermedium 7.1 (Fig. 2) auf. In einer ersten, preiswerteren Ausführungsform ist das Filtermedium 7.1 an einem fest an der bodennahen Seite 5.2 des Zwischendeckels 5 angeformten Halter 9 angeordnet (Fig. 3). Der Halter 9 umfasst eine Mehrzahl von Haltelementen 9.1. Die Haltelemente 9.1 bildern Aufnahmen mit einer Aufnahmeöffnung, die mit der Auslauföffnung 5.5 zusammenfällt. Die Halteelemente 9.1 umgrenzen darüber hinaus aber eine im Wesentlichen geschlossenen Form, die sich zum Gehäuseboden 3.1 hin verjüngt. Trotz der im wesentlichen geschlossenen Form sind die Haltelemente 9.1 mit zahlreichen kleineren Öffnungen versehen, derart, dass ein Fluid durch das Filtermedium 7.1 hindurch in die Halteelemente 9.1 eindringen kann.

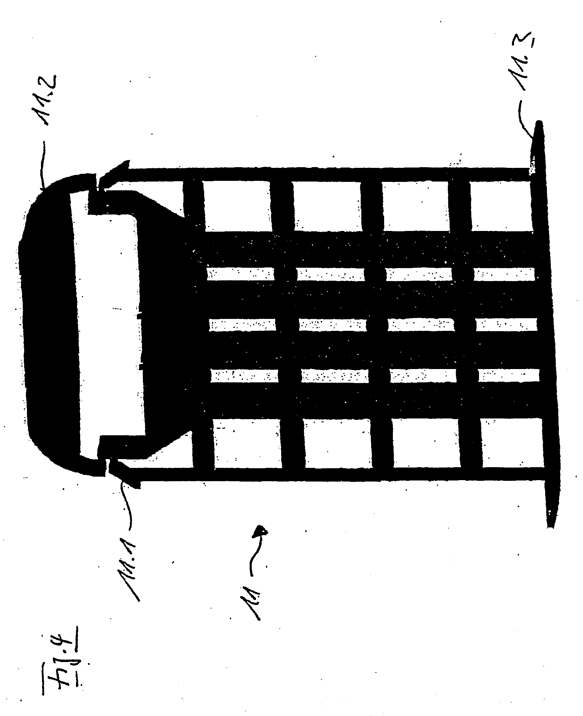

In einer zweiten Ausführungsform, die in Fig. 4 gezeigt ist, ist in jeder Auslauföffnung 5.5 ein Halter 11 lösbar eingesetzt. Diese Verbindung erfolgt in dieser Ausführungsform durch Rastnasen 11.1, mit welchen jeder Halter 11 am Rand einer Auslauföffnung 5.5 festsitzt (Fig. 1). Jeder Halter 11 erstreckt sich durch die entsprechende Auslauföffnung 5.5 hindurch in Richtung Gehäusedeckel 3.2. Der Halter 11 ist an seinem deckelseitigen Ende, also oberhalb des Zwischendeckels 5 in Fig. 1 und Fig. 2 als Handgriff 11.2 ausgebildet. Der Halter 11 weist einen skelettartigen, durchlöcherten Körper auf, an welchem das Filtermedium 7.1 festgelegt ist (Fig. 2). An seinem bodenseitigen Ende ist der Halter 11 mit einer Halteplatte 11.3 versehen. Das Filtermedium 7.1 ist vorzugsweise ein komprimierfähiger Schaum, so dass ein Ziehen des Halters 11 an dem Handgriff 11.2 zu einer Komprimierung des Filtermediums 7.1 zwischen der bodennahen Seite 5.2 und der Halteplatte 11.3 führt. Der Zugweg (Reinigungsweg) beträgt in der Regel etwa 1/3 der Länge des Filtermediums bzw. der Schaumlänge. Jede Auslauföffnung 5.5 und jedes ihr zugeordnete Filtermedium 7.1 sind so bemessen, dass das Filtermedium 7.1 aufgrund seiner größeren Außenabmessungen an der bodennahen Seite 5.2 des Zwischendeckels 5 blockiert. Durch die Komprimierung wird das Filtermedium 7.1 ausgequetscht und gereinigt. Der Schmutz fällt zusammen mit dem im Filtermedium 7.1 noch vorhandenen Restfluid nach unten in die Schmutzauffangwanne 3.4. Das Filtermedium 7.1 ist durch die Halter 9 und 11 in beiden Ausführungsformen an dem Zwischendeckel 5 aufgehängt, so dass ein der Schmutz ungehindert in diesem nach unten sinken kann.

Optional, in Fig. 1 aber dargestellt, ist auch die Verwendung eines UVC-Gerätes 13. Dieses UVC-Gerät 13 wird dem eigentlichen Filtervorgang vorgeschaltet. In der vorliegenden Ausführungsform ist das UVC-Gerät 13 in dem Raum angeordnet, der sich zwischen dem Zwischendeckel 5 und dem Gehäusedeckel 3.2 ergibt. In der in Fig. 1 und Fig. 2 gezeigten Ausführungsform mit Reinigungsfunktion des Filtermediums ist das UVC-Gerät 13 derart angeordnet, dass nach Abnahme des Gehäusedeckels 3.2 das Filtermedium 7.1 direkt gereinigt werden kann, ohne vorher das UVC-Gerät 13 auszubauen.

Eine Austrittsöffnung 13.1 des UVC-Geräts 13 schließt an die Einlauföffnung 5.4 an. Allerdings ist die Austrittsöffnung 13.1 kleiner als die Einlauföffnung 5.4, so dass die Einlauföffnung 5.4 teilweise freiliegt und als Überlauf dienen kann.

Ein zu reinigendes Fluid tritt in Fig. 1 oder Fig. 2 auf der Rückseite (durch UVC-Gerät 13 und Gehäusedeckel 3.2 verdeckt) in das UVC-Gerät 13 im Gehäuse 3 ein. Von dort gelangt das Fluid über die Einlauföffnung 5.4 in das Filtermedium 7.1 der Filtereinrichtung 7 und staut sich zwischen Gehäuseboden 3.1 und Zwischendeckel 5 an, weil der Schmutzablauf durch ein geeignetes Mittel verschlossen ist. Das Fluid steigt in dem Filtermedium 7.1 nach oben und tritt durch die wenigstens eine Auslauföffnung 5.5 auf den Zwischendeckel 5 aus und fließt über ein Gefälle 3.6 in den Gefäteaustritt-Anschluss 3.3. Der Abfluss des Fluides aus dem Gehäuse 3 führt zu einer Sogwirkung bzw. einem Unterdruck, so dass das in das Filtermedium einströmende. Fluid im Betrieb nicht nur durch Anstauung, wie bei Inbetriebnahme, sondern durch Sogwirkung im Filtermedium nach oben gezogen wird.

Bei Verstopfung des Filtermediums 7.1 bzw. der Auslauföffnungen 5.5 kann das Fluid aus der Einlauföffnung 5.4 bzw. aus Teilen derselben austreten (überlaufen). Bei Abnahme des Gehäusedeckels 3.2 kann je nach Ausführungsform entweder der Zwischendeckel 5 abgenommen und das Filtermedium 7.1 gereinigt werden oder es kann der Haltegriff 11.2 eines Halters 11 gezogen werden, um das entsprechende Filtermedium 7.1 zu reinigen. Bei Öffnung des Schmutzablaufs 3.5 kann dann der Schmutz mit dem Restfluid aus dem Gehäuse 3 abgeführt werden.

## Patentansprüche

1. Durchlauffilter mit einem Gehäuse (3), das einen Gehäuseboden(3.1) und einen Gehäusedeckel (3.2)aufweist und mit dem Gehäuseboden (3.1) in der Nähe eines Untergrunds aufstellbar ist, mit einer Filtereinrichtung (7) aus einem Filtermaterial (7.1) im Strömungsweg eines zu reinigenden Fluids, wobei das Fluid über eine Einlauföffnung (5.4) in die Filtereinrichtung eintritt und über eine Auslauföffnung (5.5) aus der Filtereinrichtung (7) austritt, wobei ein Zwischendeckel (5) mit einer in Bezug zu dem Gehäuseboden (3.1) bodennahen Seite (5.2) und bodenfernen Seite (5.3) im Inneren des Gehäuses (3) ausgebildet ist und die Filtereinrichtung (7) zwischen dem Zwischendeckel (5) und dem Gehäuseboden (3.1) angeordnet ist und die Auslauföffnung (5.5) in dem Zwischendeckel (5) ausgebildet ist und mit einem Gehäuseaustritt-Anschluss (3.3) in Fluidverbindung steht, wobei die Einlauföffnung (5.4) auf der Oberseite eines Ansatzstücks (5.6) angeordnet ist und auf einem höheren Niveau liegt als die Auslauföffnung (5.5),
**dadurch gekennzeichnet,**
**dass** die Einlauföffnung (5.4) bei verunreinigter Filtereinrichtung (7) eine Überlauffunktion für das Fluid übernimmt, wobei die Einlauföffnung (5.4) in ihrer Überlauffunktion mit dem Gehäuseaustritts-Anschluss (3.3) in Fluidverbindung steht.

2. Durchlauffilter nach Anspruch 1,
**dadurch gekennzeichnet,**
**dass** die Einlauföffnung (5.4) mit einer UVC-Austrittsöffnung (13.1) verbunden ist.

3. Durchlauffilter nach Anspruch 1 oder 2,
**dadurch gekennzeichnet,**
**dass** mehrere Einlauföffnungen (5.4) und Auslauföffnungen (5.5) ausgebildet sind.

4. Durchlauffilter nach einem der Ansprüche 1 bis 3,
**dadurch gekennzeichnet,**
**dass** die Filtereinrichtung (7) an dem Zwischendeckel (5) hängend angeordnet ist.

5. Durchlauffilter nach einem der vorstehenden Ansprüche,
**dadurch gekennzeichnet,**
**dass** die Filtereinrichtung (7) einen Halter (9; 11) für ein Filtermedium (7.1) aufweist.

6. Durchlauffilter nach Anspruch 5,
**dadurch gekennzeichnet,**
**dass** der Halter (11) in der Auslauföffnung (5.5) im Zwischendeckel (5) lösbar angeordnet ist.

7. Durchlauffilter nach Anspruch 5 oder 6,
**dadurch gekennzeichnet,**
**dass** der Halter (11) in der Nähe des Gehäusebodens (3.1) eine Halteptatte (11.3) für das Filtermedium (7.1) aufweist.

8. Durchlauffilter nach einem der Ansprüche 5 bis 7,
**dadurch gekennzeichnet,**
**dass** das Filtermedium (7.1) komprimierbar ist und wenigstens im komprimierten Zustand eine Außenabmessung aufweist, die einen Durchgang des komprimierten Filtermediums durch jede Auslauföffnung (5.5) blockiert.

9. Durchlauffilter nach Anspruch 5,
**dadurch gekennzeichnet,**
**dass** der Halter (9) an der bodennahen Seite (5.2) des Zwischendeckels (5) angeformt ist.

10. Durchlauffilter nach einem der Ansprüche 5 bis 9,
**dadurch gekennzeichnet,**
**dass** das Filtermedium (7.1) ein Schaum ist.

11. Durchlauffilter nach einem der vorstehenden Ansprüche,
**dadurch gekennzeichnet,**
**dass** im Gehäuseboden (3.1) eine umlaufende Schmutzauffangwanne (3.4) ausgebildet ist, die einen Schmutzablauf (3.5) aufweist.

12. Durchlauffilter nach einem der vorstehenden Ansprüche,
**dadurch gekennzeichnet,**
**dass** zwischen dem Deckel (3.2) und dem Zwischenboden (5) ein Raum ausgebildet ist, in welchem ein UVC-Gerät (13) angeordnet ist.

13. Durchlauffilter nach Anspruch 12,
**dadurch gekennzeichnet,**
**dass** das UVC-Gerät (13) mit einer UVC-Austrittsöffnung (13.1) an die Einlauföffnung (5.4) angeschlossen ist.

14. Durchlauffilter nach Anspruch 13,
**dadurch gekennzeichnet,**
**dass** die UVC-Austrittsöffnung (13.1) einen Strömungsquerschnitt aufweist, der den Strömungsquerschnitt der Einlauföffnung (5.4) teilweise überdeckt und der überdeckungsfreie Teil der Einlauföffnung (5:4) einen Überlauf für das Fluid bildet.

## Claims

1. A through filter comprising a housing (3) which comprises a housing base (3.1) and a housing cover (3.2) and which can be positioned with the housing base (3.1) in the vicinity of a substrate, comprising a filter device (7) consisting of a filter material (7.1) in the flow path of a fluid to be purified, wherein the fluid flows into the filter device via an inlet opening (5.4) and flows out from the filter device (7) via an outlet opening (5.5), wherein an intermediate cover (5) having a side (5.2) close to the base and a side (5.3) remote from the base in relation to the housing base (3.1) is formed in the interior of the housing (3), and the filter device (7) is arranged between the intermediate cover (5) and the housing base (3.1) and the outlet opening (5.5) is formed in the intermediate cover (5) and is in fluid communication with a housing outlet connection (3.3), wherein the inlet opening (5.4) is arranged on the upper side of an attachment piece (5.6) and lies at a higher level than the outlet opening (5.5),
**characterised in**
**that** when the filter device (7) is contaminated, the inlet opening (5.4) takes over an overflow function for the fluid, wherein the inlet opening (5.4) in its overflow function is in fluid communication with the housing outlet connection (3.3).

2. The through filter according to claim 1,
**characterised in**
**that** the inlet opening (5.4) is connected to an UVC outlet opening (13.1).

3. The through filter according to claim 1 or 2,
**characterised in**
**that** a plurality of inlet openings (5.4) and outlet openings (5.5) are formed.

4. The through filter according to any one of claims 1 to 3,
**characterised in**
**that** the filter device (7) is arranged suspendedly on the intermediate cover (5).

5. The through filter according to any one of the preceding claims,
**characterised in**
**that** the filter device (7) has a holder (9; 11) for a filter medium (7.1).

6. The through filter according to claim 5,
**characterised in**
**that** the holder (11) is arranged detachably in the outlet opening (5.5) in the intermediate cover (5).

7. The through filter according to claim 5 or 6,
**characterised in**
**that** the holder (11) has a retaining plate (11.3) for the filter medium (7.1) in the vicinity of the housing base (3.1).

8. The through filter according to any one of claims 5 to 7,
**characterised in**
**that** the filter medium (7.1) is compressible and at least in the compressed state has an external dimension which blocks any passage of the compressed filter medium through each outlet opening (5.5).

9. The through filter according to claim 5,
**characterised in**
**that** the holder (9) is moulded on the side (5.2) of the intermediate cover (5) near the base.

10. The through filter according to any one of claims 5 to 9,
**characterised in**
**that** the filter medium (7.1) is a foam.

11. The through filter according to any one of the preceding claims,
**characterised in**
**that** a circumferential dirt collecting tray (3.4) having a dirt drain (3.5) is formed in the housing base (3.1).

12. The through filter according to any one of the preceding claims,
**characterised in**
**that** a space in which a UVC device (13) is arranged, is formed between the cover (3.2) and the intermediate base (5).

13. The through filter according to claim 12,
**characterised in**
**that** the UVC device (13) is connected with a UVC outlet opening (13.1) to the inlet opening (5.4).

14. The through filter according to claim 13,
**characterised in**
**that** the UVC outlet opening (13.1) has a flow cross-section which partially covers the flow cross-section of the inlet opening (5.4) and the cover-free part of the inlet opening (5.4) forms an overflow for the fluid.

## Revendications

1. Filtre de passage, comportant un logement (3), qui présente une base de logement (3.1) et un couvercle de logement (3.2) et peut être posé avec la base de logement (3.1) à proximité d'un sol, comportant un dispositif de filtrage (7) constitué d'un matériau de filtrage (7.1) dans le trajet d'écoulement d'un fluide à purifier, dans lequel le fluide entre par l'intermédiaire d'une ouverture d'admission (5.4) dans le dispositif de filtrage et ressort par l'intermédiaire d'une ouverture d'évacuation (5.5) du dispositif de filtrage (7), dans lequel un couvercle intermédiaire (5) avec un côté proche du sol (5.2) par rapport à la base du logement (3.1) et un côté éloigné du sol (5.3) à l'intérieur du logement (3) est réalisé et le dispositif de filtrage (7) est disposé entre le couvercle intermédiaire (5) et la base du logement (3.1) et l'ouverture d'évacuation (5.5) est réalisée dans le couvercle intermédiaire (5) et est en liaison de fluide avec un raccord de sortie du logement (3.3), dans lequel l'ouverture d'admission (5.4) est disposée sur le côté supérieur d'un ajutage (5.6) et se trouve à un niveau plus haut que l'ouverture d'échappement (5.5),
**caractérisé en ce que**
l'ouverture admission (5.4) adopte dans le dispositif de filtrage (7) non purifié une fonction de déversoir, dans lequel l'ouverture d'admission (5.4) est en liaison de fluide avec le raccord de sortie du logement (3.3) dans le cadre de sa fonction de déversoir.

2. Filtre de passage selon la revendication 1,
**caractérisé en ce que**
l'ouverture d'admission (5.4) est reliée à une ouverture de sortie UVC (13.1).

3. Filtre de passage selon la revendication 1 ou 2,
**caractérisé en ce que**
plusieurs ouvertures d'admission (5.4) et ouvertures d'évacuation (5.5) sont réalisées.

4. Filtre de passage selon une des revendications 1 à 3,
**caractérisé en ce que**
le dispositif de filtrage (7) est disposé en suspension sur le couvercle intermédiaire (5).

5. Filtre de passage selon une des revendications précédentes,
**caractérisé en ce que**
le dispositif de filtrage (7) présente un support (9; 11) destiné à un milieu de filtrage (7.1).

6. Filtre de passage selon la revendication 5,
**caractérisé en ce que**
le support (11) est disposé de manière amovible dans l'ouverture d'évacuation (5.5) dans le couvercle intermédiaire (5).

7. Filtre de passage selon la revendication 5 ou 6,
**caractérisé en ce que**
le support (11) présente à proximité de la base du logement (3.1) une plaque de soutien (11.3) destinée au milieu de filtrage (7.1).

8. Filtre de passage selon une des revendications 5 à 7,
**caractérisé en ce que**
le milieu de filtrage (7.1) peut être comprimé et présente au moins dans l'état comprimé une dimension extérieure, qui bloque un passage du milieu de filtrage comprimé à travers chaque ouverture d'évacuation (5.5).

9. Filtre de passage selon la revendication 5,
**caractérisé en ce que**
le support (9) est façonné sur le côté proche du sol (5.2) du couvercle intermédiaire (5).

10. Filtre de passage selon une des revendications 5 à 9,
**caractérisé en ce que**
le milieu de filtrage (7.1) est une mousse.

11. Filtre de passage selon une des revendications précédentes,
**caractérisé en ce que**
dans la base du logement (3.1), un bac de captage d'impuretés (3.4) en faisant le tour est réalisé, lequel présente une évacuation d'impuretés (3.5).

12. Filtre de passage selon une des revendications précédentes,
**caractérisé en ce que**
entre le couvercle (3.2) et le couvercle intermédiaire (5), un espace est réalisé, dans lequel un appareil UVC (13) est disposé.

13. Filtre de passage selon la revendication 12,
**caractérisé en ce que**
l'appareil UVC (13) est raccordé avec une ouverture de sortie UVC (13.1) à l'ouverture d'admission (5.4).

14. Filtre de passage selon la revendication 13,
**caractérisé en ce que**
l'ouverture de sortie UVC (13.1) présente une section transversale d'écoulement, qui recouvre partiellement la section transversale d'écoulement de l'ouverture d'admission (5.4) et la partie découverte de l'ouverture d'admission (5.4) forme un déversoir pour le fluide.
